Europäisches Patentamt

European Patent Office

Office européen des brevets

(11) Veröffentlichungsnummer : **0 135 148**
**B1**

# (12) EUROPÄISCHE PATENTSCHRIFT

(45) Veröffentlichungstag der Patentschrift :
06.05.87

(21) Anmeldenummer : 84109722.3

(22) Anmeldetag : 16.08.84

(51) Int. Cl.⁴ : **A 62 D   3/00**, B 09 B   3/00

(54) **Verfahren und Vorrichtung zur Entfernung von Ammoniak und Ammoniumsalzen aus Kohlekraftwerksreststoffen.**

(30) Priorität : 19.08.83 DE 3329972
29.12.83 DE 3347375
02.03.84 DE 3407702

(43) Veröffentlichungstag der Anmeldung :
27.03.85 Patentblatt 85/13

(45) Bekanntmachung des Hinweises auf die Patenterteilung : 06.05.87 Patentblatt 87/19

(84) Benannte Vertragsstaaten :
AT BE DE GB IT NL SE

(56) Entgegenhaltungen :
EP-A- 0 031 667
DE-A- 2 925 882
US-A- 2 230 761
CHEMICAL ABSTRACTS, Band 97, Nr. 26, 27. Dezember 1982, Seite 401, Nr. 222426k, Columbus, Ohio,
USA;
CHEMICAL ABSTRACTS, Band 96, Nr. 22, 31. Mai
1982, Seite 379, Nr. 186803z, Columbus, Ohio, USA

(73) Patentinhaber : Gebr. Knauf Westdeutsche Gipswerke
Am Bahnhof 6
D-8715 Iphofen (DE)

(72) Erfinder : Hüller, Rolf, Dr.
Holzgasse 7
D-8715 Iphofen (DE)
Erfinder : Wirsching, Franz, Dr.
In den Weinbergen 7
D-8715 Iphofen (DE)
Erfinder : Hamm, Heiner, Dr.
Schlesierstrasse 19
D-8700 Würzburg (DE)

(74) Vertreter : Werner, Hans-Karsten, Dr. et al
Deichmannhaus am Hauptbahnhof
D-5000 Köln 1 (DE)

**Beschreibung**

Außer der Entschwefelung von Rauchgasen von Kraftwerken wird in zunehmendem Maße auch gefordert, daß der Gehalt an Stickoxiden so gering wie möglich ist. Während der Schwefel als unerwünschte Verunreinigung in den Brennstoffen bereits vorhanden ist, entstehen die Stickoxide erst während der Verbrennung durch Reaktion von Stickstoff und Sauerstoff bei hohen Temperaturen. Die Menge an Stickoxiden ist zwar durch die Verbrennungstemperatur und den Sauerstoffüberschuß beeinflußbar, kann jedoch nicht unter die geforderten Werte von weniger als 200 mg Stickoxide pro m³ Rauchgas gedrückt werden.

In Japan sind Verfahren entwickelt worden, die Stickoxide mit Hilfe von Katalysatoren aus Rauchgasen zu entfernen, indem man diese katalytisch mit beigegebenen Ammoniak in Stickstoff und Wasserdampf verwandelt. Da hierbei stets mit einem Überschuß von Ammoniak gearbeitet werden muß, muß dieser Ammoniaküberschuß anschliessend wieder aus dem Rauchgas entfernt werden. Dadurch entstehen ammoniakhaltige und/oder ammoniumsalzhaltige Reststoffe, die nicht ohne weiteres wieder aufgearbeitet, verwertet oder deponiert werden können. Insbesondere in Kohlekraftwerden, bei denen eine Entschwefelung der Rauchgase vorgenommen wird, enthalten die dabei anfallenden trockenen und nassen Reststoffe einen Teil des eingesetzten Ammoniaks in freier oder chemisch gebundener Form. Dieser Gehalt an Ammoniak und Ammoniumsalzen stört in erheblichem Maße die Wiederverwendung oder Deponierung dieser Reststoffe.

Die JP-A-82 122 986 beschreibt ein Verfahren, bei welchem einer ammoniumsalzhaltigen Kohleasche eine wässrige Lösung von Löschkalk (Calciumhydroxid) zugefügt wird und unter künstlicher Belüftung gerührt wird. Das dabei entstandene Ammonium wird zusammen mit der Luft zum Rauchabzug zurückgeführt. Es wird gezeigt, daß durch die zwangsweise Belüftung das Ammoniak besser und gründlicher aus der Asche herausgeholt werden kann als bei einfacher Zugabe der wässrigen alkalischen Lösung von Löschkalk. Es wird daher empfohlen, erhitzte Luft durchzuleiten. Bei der Befeuchtung der Asche mit der Löschkalklösung wurde so viel Wasser zugefügt, daß sie nicht mehr herumflog. Der Zusatz von Wasser soll somit 10 bis 30 Gew.-% betragen.

Die JP-A-8 219 078 beschreibt ein Verfahren zur Behandlung von Flugasche mit einem Gehalt an Ammoniumverbindungen, bei welcher ebenfalls Wasser hinzugefügt und das abgeschiedene Ammonium durch Belüftung abgeführt wird. Dazu wird ebenfalls die mit Wasser angerührte Flugasche mit einem alkalischen Stoff wie Rohkalk, Löschkalk oder Kalkstein versetzt, um den pH-Wert auf mindestens 10 zu bringen. Weiterhin soll dieses Gemisch nach Möglichkeit umgerührt und gelüftet werden. Die Temperatur soll mindestens 30, am besten über 80 °C betragen. Aus dem Reaktor wird ebenfalls ein Abgas mit gasförmigem Ammoniak entnommen und gegebenfalls erneut in das Verfahren eingeschleust. Ziel dieses Verfahrens ist es, die Ammoniumverbindungen nicht wie bisher bei Temperaturen über 400 °C, sondern bei Temperaturen von 30 bis 150 °C zu entfernen.

Die Erfindung hat sich die Aufgabe gestellt, Ammoniak und Ammmoniumsalze aus Kohlekraftwerksreststoffen zu entfernen, so daß sie anschließend entweder in üblicher Weise weiterverwertet oder aber deponiert werden können. Die Erfindung hat sich weiterhin die Aufgabe gestellt, den freien und chemisch gebundenen Ammoniak aus den Kohlekraftwerksreststoffen so zu entfernen, daß er entweder für das Verfahren zur Entfernung der Stickoxide oder für andere Zwecke wieder verwendet werden kann.

Diese Aufgabe kann überraschenderweise dadurch gelöst werden, daß man die Kohlektraftwerksreststoffe mit einem Gehalt an Ammoniak und Ammoniumsalzen zusammen mit Calciumoxid oder calciumoxidhaltigen Materialien und überschüssigen Mengen Wasser oder wäßrigen Suspensionen umsetzt, wobei die nicht zur Ablöschung des Calciumoxids benötigte Wassermenge so zu bemessen ist, daß sie durch die Reaktionswärme der Ablöschung vollständig verdampft und zusammen mit dem Ammoniak abgeführt wird.

Die Menge an Calciumoxid muß dabei so bemessen sein, daß sie etwa 5 bis 30 Gew.-%, bezogen auf die trockenen Kohlekraftwerksreststoffe, beträgt. Für das Verfahren geeignet sind Kohlekraftwerksreststoffe mit einem Gehalt an Ammoniak und/oder Ammoniumsalzen von mehr als 20 ppm. Insbesondere kommen somit Kohlekraftwerksreststoffe in Frage, die 100 bis 1 000 ppm Ammoniak in freier oder gebundener Form enthalten.

Die zur Ablöschung benötigte Wassermenge ist dabei so zu bemessen, daß sie durch die Reaktionswärme der Ablöschung vollständig verdampft und abgeführt wird. Dies geschieht dann, wenn die Wassermenge 120 bis 220 mol-%, vorzugsweise 180 bis 200 Mol-% der zur Ablöschung erforderlichen Menge beträgt. Unter solchen Bedingungen beträgt die Reaktionszeit 0,5 bis 2 Stunden. Im allgemeinen reicht eine Reaktionszeit von ca. 1 Stunde. Schwankungen der Reaktionszeit ergeben sich insbesondere aus der chemischen Zusammensetzung, der Korngröße und der Porosität der eingesetzten Produkte. Man wird daher die Reaktionszeit durch einfache Vorversuche optimieren können, wobei etwa zu lang gewählte Reaktionszeiten an sich nicht schaden, jedoch zu unnötigen Kosten führen. Zu kurze Reaktionszeiten können dazu führen, daß das Produkt noch gewisse Restmengen des nicht gelöschten Calciumoxids sowie nicht umgesetzter Ammoniumsalze enthalten und daher bei der Weiterverarbeitung zu unerwünschten Nachreaktionen und der Abgabe von Ammoniak führen.

Um Verklumpung und Verhärtung des entstehenden trockenen und pulverförmigen Derivats zu verhindern, muß die Reaktionstemperatur über 100 °C betragen. Um eine praktisch vollständige Umsetzung und Entfernung des freien und gebundenen Ammoniaks zu erreichen, muß der pH-Wert des Reaktionsgemisches stets über 12 liegen.

Zur Durchführung des erfindungsgemäßen Verfahrens werden die Kohlekraftwerksreststoffe mit einem Gehalt an Ammoniak und Ammoniumsalzen zusammen mit Calciumoxid oder calciumoxidhaltigen Materialien und dem Wasser bzw. den wäßrigen Suspensionen in einer Mischvorrichtung miteinander vermischt und danach in ein Reaktionsgefäß gefördert, in welchem das Gemisch 0,5 bis 2 Stunden verweilt. Sofern während dieses Mischvorganges bereits Ammoniak und ammoniakhaltige Brüden entstehen, können diese direkt abgezogen und mit den Brüden aus dem Reaktionsgefäß vereinigt werden.

Da die Reaktionstemperatur im Reaktionsgefäß stets über 100 °C betragen soll, muß insbesondere an den Wandungen dafür gesorgt werden, daß die Temperatur nicht unter 100 °C absinkt. Am einfachsten ist dies zu erreichen durch eine ausreichende Wärmeisolierung. Prinzipiell wäre es auch möglich, die Außenwandung mit einem Heizmantel zu umgeben, jedoch ist dies wegen der damit verbundenen Kosten weniger bevorzugt.

Die Reaktionswärme der Ablöschreaktion reicht auch unter Berücksichtigung noch vorhandener Wärmeverluste an den Wandungen aus, bis zu 120 mol-% überschüssiges Wasser zu verdampfen. Bei einem zu geringen Wasserüberschuß kommt es zu lokalen Überhitzungen und damit zu unvollständiger Ablöschung des Calciumoxids. Bei zu großem Wasserüberschuß besteht die Gefahr, daß lokal die Temperatur unter 100 °C absinkt und es dabei zu unerwünschten Verklumpungen und irreversiblen Verhärtungen des Produktes kommt.

Erfindungsgemäß entsteht so einerseits ein trockenes, pulverförmiges Derivat, welches am anderen Ende des Reaktionsgefäßes entnommen und gewünschtenfalls unmittelbar mit weiteren Zusätzen vermischt und weiterverarbeitet werden kann. So können die so erhaltenen Produkte je nach ihrer sonstigen Zusammensetzung in der Zementindustrie oder als Betonzuschlagstoff verwendet werden. Für den Fall, daß keine Weiterverwertung möglich ist, können sie zusammen mit anderen abbindenden Suspensionen von Abfallstoffen deponierfähig gemacht werden, indem man sie zu einem erdfeuchten Produkt vermischt, in die Deponie verbringt und dort verdichtet.

Erfindungsgemäß anfallende Derivate von Kohlekraftwerksreststoffen können bei entsprechender Zusammensetzung auch mit entsprechenden Zuschlagstoffen zum Mörtel, Putzmaterialien und vorgeformten Baustoffen, wie Kalksandstein etc., weiterverarbeitet werden. Es ist auch möglich, dieses Material zum Verfüllen im Bergbau, zum Bau von Dämmen oder als Wirtschaftsgut für den Landschaftsbau zu verwenden. Entscheidend ist allein, daß der Gehalt an Ammoniak und Ammoniumsalzen erfindungsgemäß unter 10 ppm liegt und daher auch bei längerer Lagerung weder zu störenden Nachreaktionen noch zur Geruchsbelästigung führt.

Der freie und der gebundene Ammoniak der eingesetzten Kohlekraftwerksreststoffe wird unter den Bedingungen des erfindungsgemäßen Verfahrens praktisch vollständig mit den Brüden aus dem Reaktionsgefäß abgeführt. Es ist ohne weiteres möglich, aus diesen Brüden Ammoniak gesondert abzuscheiden und den so erhaltenen Ammoniak wieder zu verwenden. Im einfachsten Falle kann dieser Ammoniak erneut eingesetzt werden zur Reaktion mit den Stickoxiden in der Anlage zur Entfernung der Stickoxide aus den Rauchgasen. Gewünschtenfalls kann dieser Ammmoniak aber auch für andere Zwecke im Rahmen der Aufarbeitung und Weiterverarbeitung von Kraftwerksreststoffen verwendet werden.

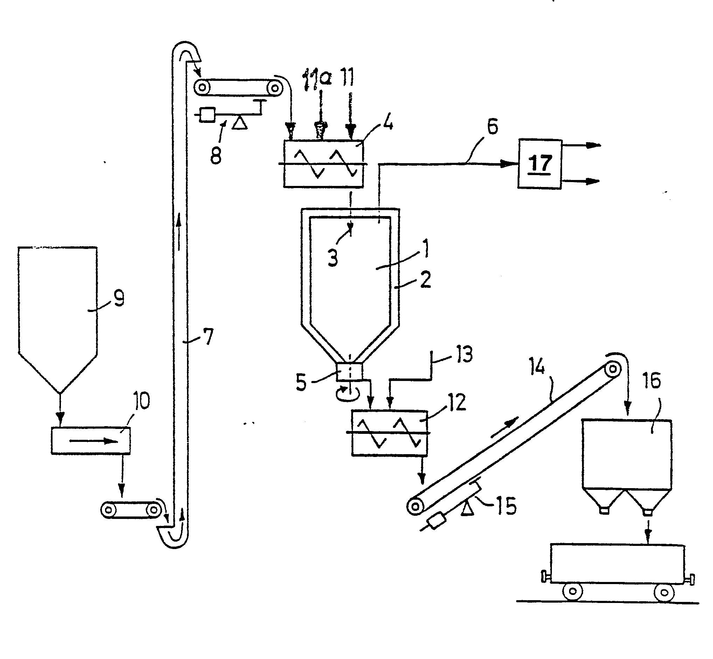

In der Figur ist eine erfindungsgemäße Vorrichtung zur Durchführung des Verfahrens näher erläutert. In dieser Figur bedeuten :

1 das Reaktionsgefäß ;
2 die Wärmeisolierung der Wandung ;
3 die Einfüllöffnung für das Gemisch ;
4 die Mischvorrichtung für Ammoniak und ammoniumsalzhaltige Kohlekraftwerksreststoffe mit Calciumoxid oder calciumoxidhaltigen Materialien und Wasser oder wäßrigen Suspensionen ;
5 eine Austragsvorrichtung für trockenes, pulverförmiges Derivat am Boden des Reaktionsgefäßes ;
6 der Brüdenabzug für verdampftes überschüssiges Wasser zusammen mit dem Ammoniak ;
7 eine Fördervorrichtung für feste Kohlekraftwerksreststoffe ;
8 eine Bandwaage für feste Reststoffe ;
9 ein Silo für feste Reststoffe ;
10 eine pneumatische Fördereinrichtung für feste Reststoffe ;
11 eine Zuführungsleitung für Wasser oder wäßrige Suspension zum Mischer ;
11a Zuführungsvorrichtung für Calciumoxid oder calciumoxidhaltige Materialien ;
12 ein Mischer für das entstehende trockene pulverförmige Derivat mit weiteren Komponenten ;
13 die Zuführungsleitung für weitere Komponenten ;
14 Förderband von der Mischanlage ;
15 Bandwaage für das Endprodukt ;
16 Verladesilo ;
17 Kondensationsvorrichtung für Ammoniak.

In dieser Vorrichtung werden Kohlekraftwerksreststoffe mit einem Gehalt von Ammoniak und Ammoniumsalzen, beispielsweise entsprechende Flugaschen, aus dem Silo (9) über die pneumatische Förderung (10) und die Förderanlage (7) auf die Bandwaage (8) gefördert und dort in den Mischer gegeben. Gleichzeitig wird über die Zuleitung (11) Wasser oder wäßrige Suspension zudosiert. Über die Führungsvorrichtung (11a) wird die notwendige Menge Calciumoxid oder calciumoxidhaltigen Materials zudosiert, sofern die Kohlekraftwerksreststoffe nicht bereits eine ausreichende Menge Calciumoxid enthalten.

Bei Verwendung von Braunkohlenaschen, die trocken entschwefelt wurden, ist der Calciumoxidgehalt bereits hoch genug, so daß die weitere Zugabe von Calciumoxid entfallen kann.

Das Gemisch aus Kohlekraftwerksreststoffen, Calciumoxid oder calciumoxidhaltigen Materialien und überschüssigen Mengen Wasser oder wäßrigen Suspensionen wird durch die Einfüllöffnung (3) in das Reaktionsgefäß (1) gegeben, in welchem es allmählich von oben nach unten absinkt. Die Austragsvorrichtung (5) muß so reguliert sein, daß die Reaktionszeit 0,5 bis 2 Stunden, vorzugsweise 1 Stunde beträgt, die Reaktionszeit kann durch die Fördergeschwindigkeit der Austragsvorrichtung reguliert werden. Die zugeführte Menge an Gemisch durch die Einfüllöffnung (3) muß hierauf abgestimmt sein. Es ist möglich, die Reaktionszeit und damit die Dosierung und Entnahme automatisch zu regeln durch Messung der Reaktionstemperatur an der Außenwandung. Die überschüssigen Wassermengen werden zusammen mit dem Ammoniak als Dampf durch den Brüdenabzug (6) entnommen und in geeigneter Weise weiterverwertet. Beispielsweise ist es möglich, die Brüden so zu kondensieren, daß der Ammoniak in das Verfahren zur Entfernung der Stickoxide zurückgeführt werden kann. Sofern unmittelbar nach der Herstellung des trockenen pulverförmigen Derivates dieses mit festen oder flüssigen weiteren Komponenten vermischt werden soll, geschieht dies in dem weiteren Mischer (12), welcher das so erhaltene Endprodukt über die Förderanlage (14) in das Ladesilo (16) transportiert.

Erfindungswesentlich für die Vorrichtung sind jedoch nur die Kombination aus der Mischvorrichtung (4), der Einfüllöffnung (3), dem Brüdenabzug (6), der Auftragsvorrichtung (5) und den wärmeisolierten Wandungen (2).

Das erfindungsgemäße Verfahren wird in den nachfolgenden Beispielen näher erläutert :

Beispiel 1

Steinkohlenflugasche mit einem Ammoniakgehalt von ca. 400 ppm, wie sie nach einem mit Ammoniak betriebenen Verfahren zur Entfernung der Stickoxide (DeNOx-Verfahren) im Elektrofilter anfällt, wird in einem Durchlaufmischer mit ca. 10 Gew.-% Calciumoxid, bezogen auf die Flugasche, und mit Wasser im Verhältnis 1 : 0,07 vermischt. Das Vermischungsprodukt erwärmt sich durch die Ablöschreaktion auf ca. 120 °C und wird zum Nachlöschen in einen wärmeisolierten Reaktionsbehälter transportiert, welcher eine Austragsvorrichtung und einen Brüdenabzug mit Kondensationsvorrichtung für das freigesetzte Ammoniak aufweist. Nach einer Reaktionszeit von ca. 1 Stunde wird das Ablöschprodukt mit einem Ammoniakgehalt von weniger als 10 ppm aus dem Behälter entnommen. Es kann in bekannter Weise als Betonzuschlagstoff verwendet werden.

Beispiel 2

1 Teil Steinkohlenflugasche mit einem Ammoniakgehalt von ca. 400 ppm, wie sie nach einem mit Ammoniak betriebenen Verfahren der Entfernung der Stickoxide (DeNOx-Verfahren) im Elektrofilter anfällt, und 1 Teil Calciumsulfit/Calciumsulfat-Gemisch, wie es bei einem trockenen Entschwefelungsverfahren anfällt, werden in einem Durchlaufmischer mit ca. 10 Gew.-% Calciumoxid, bezogen auf die Flugasche, mit Wasser im Verhältnis 1 : 0,07 vermischt. Das Vermischungsprodukt erwärmt sich durch die Ablöschreaktion auf ca. 110 °C und wird zum Nachlöschen in einen wärmeisolierten Reaktionsbehälter transportiert, welcher eine Austragsvorrichtung und einen Brüdenabzug mit Kondensationsvorrichtung für das freigesetzte Ammoniak aufweist. Nach einer Reaktionszeit von ca. 1 Stunde wird das Ablöschprodukt mit einem Ammoniakgehalt von unter 10 ppm aus dem Behälter entnommen und kann nun in bekannter Weise zu einem deponierfähigen Produkt weiterverarbeitet werden.

Beispiel 3

1 Teil Braunkohlenflugasche mit einem Gehalt an freiem Calciumoxid von ca. 20 % und einem Ammoniakgehalt von ca. 200 ppm, wie sie nach einem mit Ammoniak betriebenen Verfahren zur Entfernung der Stickoxide (DeNOx-Verfahren) im Elektrofilter anfällt, wird mit 1 Teil 50 % Feststoff enthaltende Gipssuspension mit einem Ammoniakgehalt von ca. 400 ppm, wie sie bei einem nassen Entschwefelungsverfahren als Hydrozyklonenunterlauf anfällt, im Verhältnis 1 : 0,3 vermischt. Das Vermischungsprodukt erwärmt sich durch die Ablöschreaktion auf ca. 130 °C und wird zum Nachlösen in einem wärmeisolierten Reaktionsbehälter transportiert. Dieser weist eine Austragsvorrichtung und einen Brüdenabzug mit Kondensationsvorrichtung für das freigesetzte Ammoniakgas auf. Nach einer Reaktionszeit von ca. 1 Stunde wird das Ablöschprodukt mit einem Ammoniakgehalt von unter 10 ppm aus dem Behälter entnommen und kann nun in bekannter Weise zu einem deponierfähigen Produkt weiterverarbeitet werden.

Patentansprüche

1. Verfahren zur Entfernung von Ammoniak und Ammoniumsalzen aus Kohlekraftwerk-Reststoffen, wobei diese zusammen mit 5 bis 30 Gew.-% Calciumoxid oder calciumoxidhaltigen Materialien mit einer Menge von 5 bis 30 Gew.-% Calciumoxid, bezogen auf die Menge der eingesetzten trockenen Kohlekraftwerk-Reststoffe, mit 120 bis 220 Mol.-% überschüssigen Mengen Wasser oder wäßrigen Suspensionen 0,5 bis 2 Stunden bei Reaktionstemperaturen über 100 °C und einem pH-Wert über 12 umgesetzt werden, und wobei die nicht zur Ablöschung des Calciumoxids benötigte Wassermenge so bemessen ist, daß sie duch die Reaktionswärme der Ablöschung vollständig verdampft und zusammen mit dem Ammoniak abgeführt wird.

2. Vorrichtung zur Durchführung des Verfahrens nach Anspruch 1, bestehend aus

a) einer Mischvorrichtung (4) für feste Kohlekraftwerksreststoffe mit Wasser oder wäßrigen Suspensionen,

b) einem Reaktionsgefäß (1) mit einer Einfüllöffnung (3) für das Gemisch aus der Mischvorrichtung, einer Austragsvorrichtung (5) für das trockene, pulverförmige Derivat am Boden des Reaktionsgefäßes mit wärmeisolierten Wandungen (2),

c) einem Brüdenabzug (6) für das verdampfte Wasser und das freigesetzte Ammoniak,

d) einer Kondensationsvorrichtung (17) für Ammoniak und ggf. einer Rückführungsleitung für kondensierten Ammoniak zur Rauchgasreinigungsanlage.

## Claims

1. A process for the removal of ammonia and ammonium salts from coal-fired power station waste materials, wherein said waste materials together with from 5 to 30 % by weight of calcium oxide or materials containing calcium oxide in an amount of from 5 to 30 % by weight of calcium oxide, based on the amount of the initially employed dry coal-fired power station waste materials, are reacted with from 120 to 220 % by mole excess water or aqueous suspensions at a reaction temperature in excess of 100 °C and a pH of higher than 12 fro 0.5 to 2 hours and wherein the amount of water not required for the hydration of the calcium oxide is adjusted so that it is completely evaporated by the heat of reaction of the hydration and is discharged with the ammonia.

2. An apparatus for carrying out the process according to claim 1, consisting of

a) mixing means (4) for mixing solid coal-fired power station waste materials with water or aqueous suspensions ;

b) a reaction vessel (1) with a feed opening (3) for the mixture supplied from the mixing means, discharge means (5) for the dry powdery derivative at the bottom of the reaction vessel with heat-insulated walls (2) ;

c) a vapor vent (6) for the evaporated water and the released ammonia ;

d) condensation means (17) for ammonia and, optionally, a pipe for recycling condensed ammonia to the flue gas purification unit.

## Revendications

1. Procédé pour retirer l'ammoniac et les sels d'ammonium des matières résiduelles des centrales houillères, procédé selon lequel on fait réagir ces matières résiduelles en commun avec 5 à 30 % en poids d'oxyde de calcium ou des matières à teneur d'oxyde de calcium contenant une quantité de 5 à 30 % en poids d'oxyde de calcium par rapport à la quantité de matières résiduelles sèches des centrales houillères mises en œuvre, avec 120 à 220 % molaire de quantités d'eau en excès ou des suspensions aqueuses, à des températures de réaction de plus de 100 °C pour un temps de 1/2 à 2 heures et à une valeur pH de plus de 12, et dans lequel la quantité d'eau non nécessaire pour éteindre l'oxyde de calcium est réglée d'une manière à assurer son évaporation complète par la chaleur de réaction d'extinction et son évacuation en commun avec l'ammoniac.

2. Dispositif permettant de réaliser le procédé selon la revendication 1 comprenant

a) un moyen mélangeur (4) pour mélanger les matières résiduelles solides des centrales houillères avec de l'eau ou des suspensions aqueuses,

b) un récipient de réaction (1) avec un orifice de remplissage (3) pour le mélange du moyen mélangeur, un moyen d'évacuation (5) pour le dérivé sec sous forme de poudre au fond du récipient de réaction, le récipient mentionné ayant des parois (2) isolés thermiquement,

c) un conduit d'évacuation de la vapeur (6) pour l'eau vaporisée et l'ammoniac libéré,

d) un moyen de condensation (17) pour l'ammoniac et, si nécessaire, un conduit pour retourner l'ammoniac condensé à l'installation de nettoyage des gaz de fumée.